# EUROPEAN PATENT APPLICATION

(11) **EP 1 223 127 A1**
(43) Date of publication of application: **17.07.2002**
(21) Application number: 02388004.0
(22) Date of filing: 15.01.2002
(51) Int. Cl.: B65G 59/10, B65B 23/02, B65B 43/44

(54) **Destacking apparatus for egg trays**

(30) Priority: 15.01.2001 DK 200100063
(71) Applicant: SANOVO ENGINEERING A/S, DK-5210 Odense NV (DK)
(72) Inventor: Kristensen, Jens Kristian Sonderby, 5220 Odense So (DK); Rasmussen, Hans Kristian Lohmann, 5462 Morud (DK)
(74) Representative: Indahl, Peter Jensen

(57) **Abstract**

A destacking apparatus has a number of lifting devices (10) for mechanical destacking of egg trays. Each lifting device comprises a carrier part (27) with at least one gripper unit (20, 21) having an abutment (22) and a gripper means (25). The abutment and the gripper means are mutually spaced in the destacking direction. The gripper means (25) is movable transversely to the destacking direction in relation to the abutment, and the gripper unit (20, 21) is movable in the destacking direction in relation to the carrier part (27).

## Description

The present invention relates to a destacking apparatus with a number of lifting devices for mechanical destacking of egg trays, the lifting device comprising a carrier part with at least one gripper unit having an abutment and a gripper means, the abutment and the gripper means being mutually spaced in the destacking direction.

US 3,572,549 describes such an apparatus for destacking and restacking of flat objects, such as egg trays. In this apparatus, the carrier part is an arm swingably mounted in a yoke of the lifting device, and this yoke can be swung in the destacking direction at right angles to the swinging movement of the arm. The abutment and the gripper means are formed as a fixed recess in the end of the arm and both parts are thus moved in a joint arc-shaped movement towards and away from the stack of egg trays when the arm swings. If a tray is placed a little askew at the top of the stack, the tray edge may be in an incorrect height in relation to the position in which abutment and gripper means meet the tray stack, which will result in crushing or other destruction of the tray edge with consequent faulty gripping of the tray.

JP-A 8-20436 describes a destacking apparatus with a lifting device with several gripper means, but no abutment. The gripper means are movable in the destacking direction in relation to the carrier part. The frame with the tray stack is provided with abutments that limit the upward movement of the upper surface of the topmost tray of the stack. The gripper means is formed as a pin, which is pressed into the material of the tray at a long distance from the tray edge. Thus, gripping of a tray necessarily results in damage to the tray.

In the known apparatuses, it may furthermore be difficult to separate trays stuck together due to smearing, which is a regular result of broken eggs.

It is an object of the present invention to provide a destacking apparatus that can grip and move one and only one tray at a minimum risk of damage to the tray material.

This object is obtained with a destacking apparatus which, according to the invention, is characterized in that the gripper means is movable transversely to the destacking direction in relation to the abutment, and in that the said gripper unit is movable in the destacking direction in relation to the carrier part.

The lifting device according to the invention works by an assembly of a gripper means and an abutment on a joint gripper unit, the gripper means being located furthest down. The gripper means being moved to the side, the gripper unit is moved down towards the topmost egg tray of a stack, or the stack is moved upwards towards the gripper unit until there is contact between tray and abutment. The gripper means is now turned or displaced in a manner so that it enters into the space between the topmost and the second topmost tray of the stack. The abutment and the gripper means are thus located on either side of the tray, and when the gripper unit is lifted, the topmost tray moves with it upwards, resting on the upper surface of the gripper means. The trays are actively separated by the gripper means entering between them, and any sticking together is undone. The lifting device thus lifts a single tray regardless of the design of the tray and any smearing on it.

Preferably, the movement of the gripper means is at right angles to the destacking direction, but this is not a condition for the functionability of the gripper means. Particularly when the grip is made around a part of the tray that is formed with beads or similar increases of thickness, the gripper means may advantageously engage slightly from above or below in relation to the plane of the tray. The statement that the gripper means is movable transversely to the destacking direction thus merely means that the movement is oblique in relation to or at right angles to the destacking direction.

Preferably, prior to engagement the distance between the lower surface of the abutment and the upper surface of the gripper means is larger than the material thickness of the egg tray and smaller than the sum of the distance between the abutment point and the gripping point of the tray and the distance between the gripping points of two consecutive trays of the stack when the trays are pressed completely together.

Abutment point means the point on the tray where it is in contact with the lower surface of the abutment, while the gripping point is the point where the tray rests against the gripper means when the tray is lifted. When the trays are pressed as tightly together as possible, there is a distance called the free height between two consecutive trays. This free height will normally depend on where the gripper unit engages, as most tray types are specifically designed so that in certain areas they cannot come into contact with each other even though in other areas they are closely adjacent. This design is used, for example, to reduce the risk of their sticking together, as the trays are kept separated at particularly exposed areas.

A design of the gripper unit in which, prior to engagement, the distance between the lower surface of the abutment and the upper surface of the gripper means is smaller than the sum of the distance between the abutment point and the gripping point of the tray and the distance between the gripping points of two consecutive trays, ensures that in practice it is almost impossible for the gripper unit to include more than one tray in each lift, which substantially increases reliability in operation.

In one embodiment of the invention, the distance between abutment point and gripping point of the gripper unit is smaller than six times the material thickness of the egg tray at the place where the gripper unit engages. This embodiment is particularly applicable when the trays are of such quality that they bend under their own weight when lifted. In this case, to ensure that the tray does not slide out of the gripper unit, an upper abutment for the tray is necessary during the lift, which is obtained in that the distance between abutment and gripper means is limited.

In order to obtain a particularly secure grip on the tray, the gripper unit can function through a hole in the tray so that the gripper means is located on the opposite side of the tray in relation to the abutment. This limits the risk mentioned above that the tray can slide out of the gripper unit as the tray encloses the gripper unit. However, this design necessitates a very accurate design of the gripper unit, which must not be too large to get through the hole in the tray, but nevertheless has to get a proper grip of the lower surface.

In another embodiment, the gripper unit engages at an edge of the tray. This gripping manner is particularly applicable in the cases where the tray has no suitable holes or where, for example due to the risk of obstructive smearing of the gripper unit parts, it is undesirable to grip further in on the tray.

In view of a more secure and stable lift, the lifting unit preferably has at least two, preferably four, gripper units suspended separately and movable in the destacking direction independently of each other.

The plastic trays used in the egg industry are normally of such thin quality that a single gripper unit, regardless of design, is insufficient to provide a stable lift. This is true particularly where lifting is performed along the edge of the tray. For the commonly used square trays for, for example 30 or 40 eggs, four lifting units are preferred, engaging two by two at respective ends of two opposite sides or through four holes symmetrically disposed around the tray centre.

When several gripper units are used, it is necessary to take into account that in many cases the trays are warped due to mechanical wear or heating in connection with, for example, washing. This is done in that each gripper unit is suspended separately and that the units first coming into contact with the tray are pressed upwards in the destacking direction until the others have come into contact with the tray. Then all gripper means can be actuated simultaneously.

In a preferred embodiment, each gripper unit is spring loaded so that it is forced back towards its starting position. The spring load prevents smearing from resulting in the gripper units being stuck in a displaced position and thus being unable to move sufficiently far when a particularly warped tray is to be lifted. As an alternative to using spring loading, the gripper unit can be suspended in such a large hole in its holder that there is no risk of it being stuck due to smearing.

To give the destacking apparatus the greatest possible applicability and flexibility, the gripper unit of a preferred embodiment is adjustable so that the distance between abutment and gripper means can be varied for adaptation to the current tray type.

As mentioned, the distance between gripper means and abutment is adapted so that there is only room for one tray therebetween, but this distance depends on the tray type and on the place of engagement on the tray. If switches are made between several different tray types or gripping manners, it is thus an advantage that this distance can be varied.

Preferably, the abutment is formed so as to be turnable about the gripper unit with at least two radially projecting arms the lower edges of which are at different levels in relation to the gripper means.

In this embodiment it is possible to change the distance between abutment and gripper means without dismounting the gripper unit, whereby lengthy stoppages can be avoided.

The design of the gripper means has an effect on how well the destacking apparatus works. Particularly their assistance in separating the trays is of importance, for which reason the gripper means preferably has an upper surface which, towards the egg trays, ends in an edge capable of entering between the trays.

Since the gripper means further serves as the outermost tip of the gripper unit, the gripper means is preferably at least partially tapered or rounded towards the lower surface. This design will permit the gripper means to enter more easily through holes in the tray, as the necessity of hitting the hole accurately is reduced, and in case of several gripper units engaging along the edge of the tray they will together act as guide surfaces for centring the tray in relation to the lifting device. The design of the gripper means will thus contribute to guiding the trays into place in relation to the lifting device.

In a particularly preferred embodiment, the gripper means is shaped substantially like a cone or a truncated cone with the base facing the corresponding abutment, and the cone is turnable about an axis located eccentrically in relation to the axis of symmetry of the cone.

This embodiment combines the facts that the gripper means contributes to the positioning of the trays and that it has an edge serving to separate the trays. Moreover, the turning of the cone about an eccentric axis means that the separation of the trays is gradual. As the cone enters further in between the trays, the lower tray will be pressed further and further away from the upper one so that the distance between the two trays gradually increases. An edge of a fixed height would provide a more forced separation with resulting greater tray wear.

In view of adaptation to gripping through holes in the tray, the gripper unit and particularly the gripper means must be suitably designed. To increase the ability of the gripper unit to guide itself into place in the hole, the gripper means is thus preferably shaped substantially like a spherical segment with the cut facing the corresponding abutment, and the spherical segment is turnable about an axis located eccentrically in relation to the axis of symmetry of the spherical segment.

In a further development of both the designs of the gripper means mentioned above, the axis of symmetry of the gripper means is substantially parallel to the destacking direction, and the axis of rotation is also substantially parallel to the destacking direction. This ensures that the cone does not tend to cut itself into either the tray to be lifted or the one located below it in the stack.

Preferably, the destacking direction is substantially vertical. This obviates unnecessary handling when the lifting device is used for feeding trays into commonly used tray washing systems where the trays are treated in a substantially horizontal position.

In an alternative embodiment, the destacking direction is substantially horizontal. However, this embodiment is only to be preferred where other parts of the production line demand horizontal stacks, as it will otherwise merely result in unnecessary handling. Furthermore, all other things being equal, horizontal stacks are more difficult to handle because they tend to separate owing to the influence of gravity on the outermost trays.

In the preferred embodiment, the movement of the gripper means is induced synchronously by means of an actuating mechanism arranged topmost in the lifting device above the carrier part. Having the actuating mechanism as part of the actual lifting device turns the latter into a compact unit, and it can readily be replaced, moved or an extra unit can be added without major interference with the remaining machinery.

Preferably, the actuating mechanism has a rotatable body and a number of links each connected to an arm of the gripper means, and the rotatable body transmits pulls and pushes, preferably from a pneumatic drive cylinder, to the links so that the gripper means are rotated by pulls in and pushes on the arms.

This purely mechanical structure provides great reliability and rapid and inexpensive replacement of defect or worn-out parts.

In an alternative embodiment, the actuating mechanism consists of several separate mechanisms each driving one or more gripper means. This embodiment is preferred particularly where the number of gripper units must be changeable or where the gripper units have to be mutually movable, as will be the case, for example, if the apparatus has to work with trays of different sizes or shapes.

In one embodiment of the invention, the lifting devices are suspended, preferably pivotally suspended, from a yoke supported by pivot arms projecting from a rotatable shaft.

Like the preferred actuating mechanism, this embodiment is also distinguished by its reliability obtained by virtue of its simple structure. When the shaft is rotated, the pivot arms and thus the yoke with the lifting devices and the gripped trays are pivoted about the shaft to a position in which the trays are released and conveyed onwards for, for example, washing. Whereas the trays are substantially horizontal both in the stack and in the further treatment, the lifting devices are preferably pivotally suspended. Conversely, the lifting devices may be non-pivotally fastened to the yoke, whereby the orientation of the tray in the space can be changed simultaneously with the rotation of the shaft, or a solution where they can be temporarily fastened may be used.

The invention will now be explained in more detail below on the basis of the highly schematic drawing, in which,
Fig. 1 is a schematic view of the destacking apparatus incorporated in a washing system for egg trays;
Fig. 2 depicts an oblique top view of lifting devices for gripping in the tray hole(s), in an exploded and an assembled state;
Fig. 3 depicts an oblique top view of a lifting device for gripping the edge of the tray, in an exploded and an assembled state;
Figs. 4a to 4c illustrate a gripper unit in a preferred embodiment in an open, a closed and a slightly lifted state, respectively;
Figs. 5a and 5b are schematic diagrams of an alternative design of the gripper unit in an open and a closed state, respectively, and
Fig. 6 is a cross-sectional view through a tray in which three gripper units grip holes in the depressions of the tray, while the abutments abut the upper surface of the elevations (Fig. 6a), the transition sections between elevations and depressions (Fig. 6b) and the bottom of the depressions (Fig. 6c).

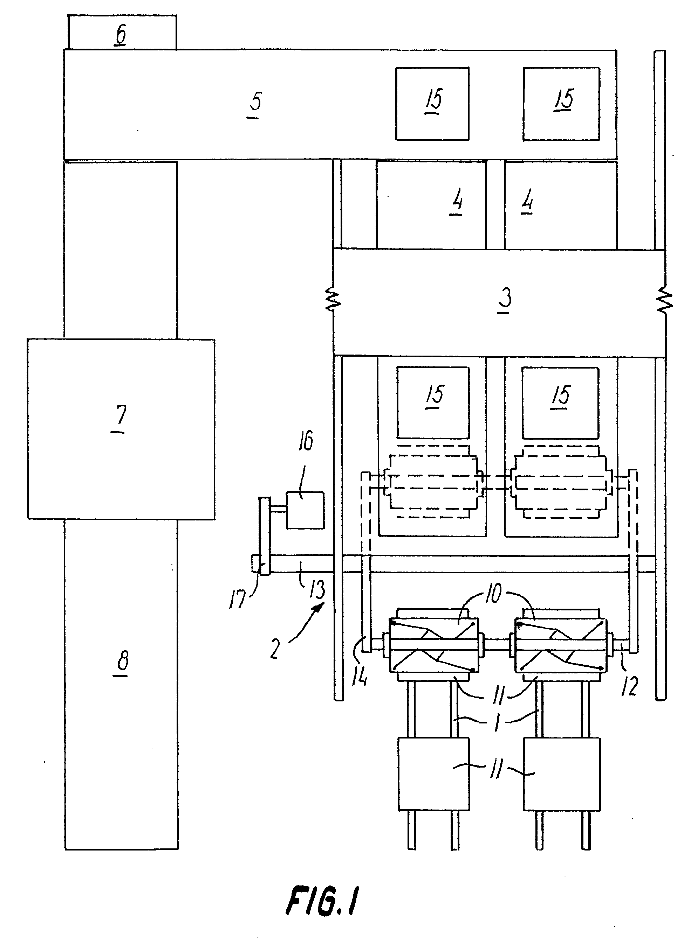

Fig. 1 depicts an example of a washing system for egg trays in which the destacking apparatus can be used. In the order stated, the washing system consists of a feed conveyor 1, a destacking apparatus 2 according to the invention, a washing machine 3, a restacking apparatus 4, a conveyor 5 which has a transfer mechanism 6, a dryer 7, such as a centrifuge, and a discharge conveyor 8. The system is shaped like a U to enable one person to operate both the feeding into and the discharging from the system.

The destacking apparatus 2 of the system is reproduced as an arrangement with two lifting devices 10 to enable destacking of two stacks 11 at the same time. The number of lifting devices 10 can be varied according to the capacity of the other parts of the system. The lifting devices 10 are pivotally suspended on a yoke 12 connected to a shaft 13 by means of pivot arms 14 at right angles to both the yoke 12 and the shaft 13. By rotation of the shaft 13, the lifting devices 10 are swung from the position above the stacks 11 to a position on the opposite side of the shaft 13, from where the trays 15 are passed on to the next part of the system, here a washing machine. The pivotal suspension on the yoke 12 ensures permanently vertical suspension of the lifting devices 10 under the influence of gravity. The shaft 13 is rotated by means of a motor 16 connected to the shaft via a chain or belt drive 17.

For the sake of ease, the same reference numerals will be used for several different embodiments in the following description.

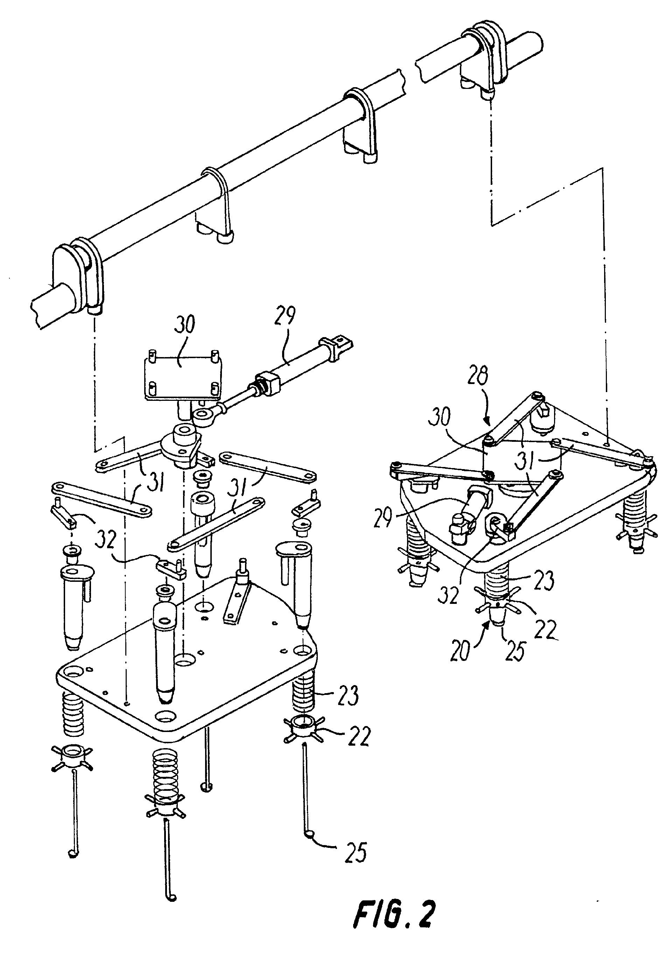

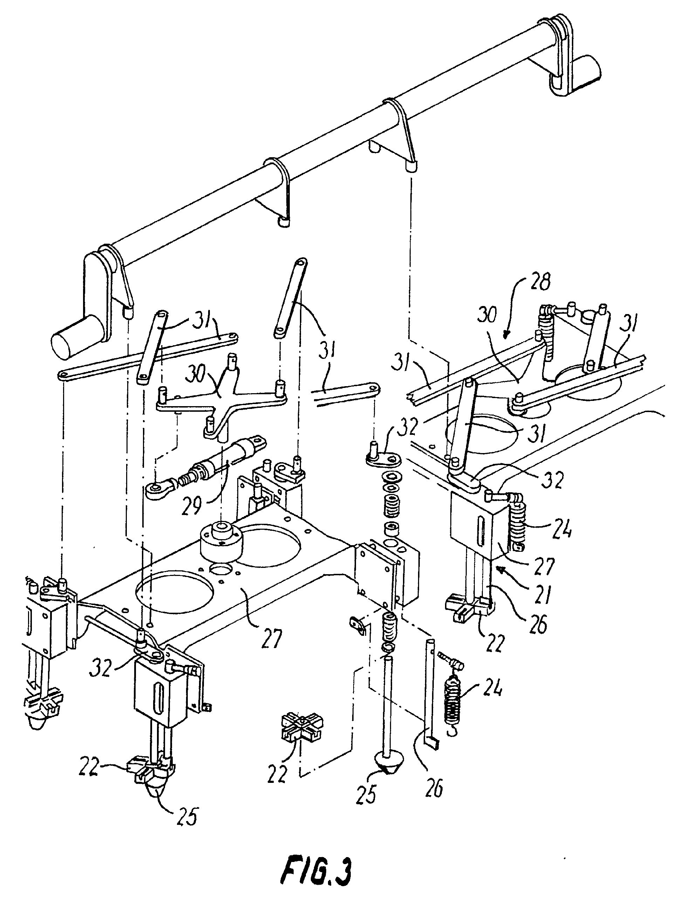

The lifting devices 10 are shown enlarged in Figs. 2 and 3, which depict devices designed to lift by holes and along the edge of the tray 15, respectively. As it appears, each lifting device 10 in both the embodiments has four gripper units 20, 21, which is preferable for handling of the most commonly used, relatively flexible plastic trays for, for example, 30 eggs. The gripper units 20, 21 are separately suspended and movable in the destacking direction independently of each other so that all gripper units 20, 21 can get a grip on the tray 15, even if it is askew or warped. The stack 11 is moved upwards or the lifting device 10 downwards until the abutments 22 of all the gripper units are in contact with the topmost tray 15 of the stack 11. Before each new lift, the gripper units 20, 21 are forced back to their starting position by respective springs 23, 24. The springs can either, like the spring 23 in Fig. 2, be incorporated as part of the actual gripper unit 20 so that its axis of symmetry coincides with the axis of rotation of the gripper means 25, or, like the spring 24 of Fig. 3, they may be of a more external nature and be placed on the side of the gripper unit 21. Other types of springs than the spiral springs shown in Figs. 2 and 3 can also be used.

Contrary to the spring of Fig. 2, the spring 24 of Fig. 3 does not act directly on the abutment 22, but on a rod-shaped intermediate section 26, the lower end of which ends in a plate while the upper end goes through the fixed part 27 of the lifting device and projects from the upper surface thereof. The spring 24 interconnects the upper end of the intermediate section 26 and the fixed part 27 of the lifting device so that the spring is extended when the abutment 22 is pressed upwards. The lower plate-shaped part of the intermediate section 26 is journalled in a slot in one of the arms of the abutment and thus ensures that the abutment 22 does not turn during operation.

The gripping function of the gripper units 20, 21 is actuated by means of an actuating mechanism 28, which is arranged at the top of the lifting device 10. The actuating mechanism 28 is operated by a pneumatic drive cylinder 29, which turns a rotatable body 30 back and forth. Links 31 are fastened on the rotatable body 30 and also on arms 32 on the gripper means 25, whose rod-shaped extensions penetrate the fixed part 27 of the lifting device. This provides a turning of the gripper means. The force at which the gripper means 25 are turned is adapted to make it suitably large for the gripper means to have sufficient force to separate trays stuck together due to smearing with, for example, broken eggs.

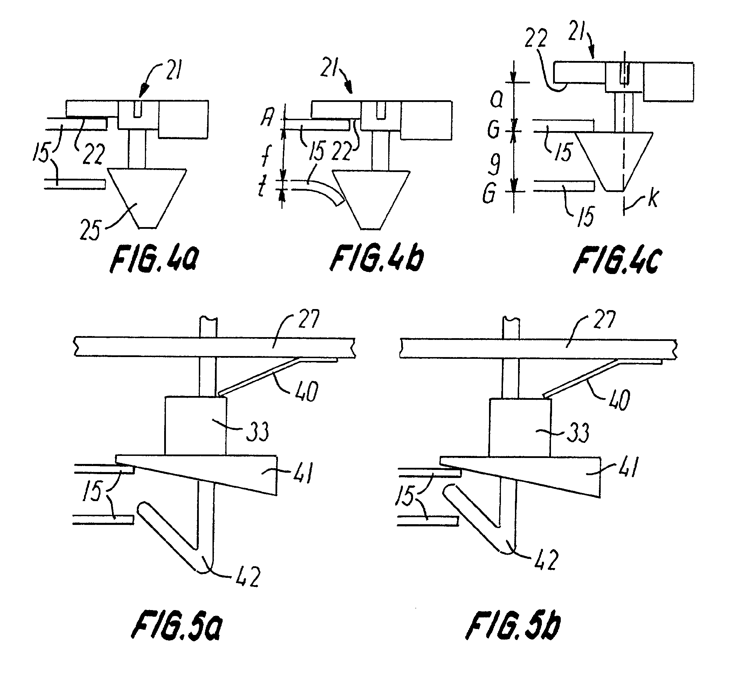

Figs. 4a to 4c show a gripper unit 21 in its two extreme positions, where it is open and where it is closed around the edge of a tray 15, respectively. As it appears, each gripper unit 21 has an abutment 22 and a gripper means 25, the gripper means being movable in a manner so that it can be moved in under the abutment and thus close around the tray. The distance a between the abutment and the gripper means is preferably smaller than the sum of the distance between the abutment point A and the gripping point G and the distance g between the gripping points of two consecutive trays of the stack when they are pressed completely together. The distance between the two gripping points can also be expressed as the sum of the material thickness t of the egg tray at the place of engagement of the gripper unit and the free height f between the two trays. When this is observed, the gripper unit can only grip a single tray at a time during normal operation.

In the example of an embodiment shown in Fig. 3 and Figs. 4a to 4c, the gripper means 25 is formed as a truncated cone rotatable about an eccentric axis k for movement at right angles to the destacking direction, but an eccentric disc, a displaceable pawl or a similar movable means may just as well be used, possibly moved obliquely in relation to the destacking direction. The only requirement is that the edge of the gripper means 25 on the side facing/turned against the trays is not higher than the free height f between the stacked trays 15. If the same destacking apparatus is used for several different types of trays, the gripper means 25 can be adapted to the type with the smallest free height f.

As it is shown in Figs. 2, 3 and 4, the abutment 22 is formed as a cross, the arms of which have different thicknesses or are located at different heights. By turning the cross about its axis of symmetry, the distance between the lower surface of the abutment and the gripper means can thus be changed without having to dismount the abutment from the gripper unit. In the example of an embodiment shown in Fig. 3, the intermediate section 26 keeping the abutment 22 in place during operation has to be lifted before the abutment can be turned, but this can be done manually without the use of tools. In apparatuses with frequent switches between different tray types, the lifting device can advantageously be designed with a remote control.

Fig. 5 shows a schematic diagram of an alternative design of the gripper unit in which the spring 23 as well as the abutment 22 and the gripper means 25 are altered in relation to the preferred examples of embodiments. The spring is a leaf spring 40 mounted on the fixed part 27 of the lifting device and is pressed upwards by a pipe section 33 on the abutment 41. The abutment 41 is a disc of varying thickness, and the gripper means 42 is a pin which is lifted and displaced sideways and thus acts obliquely in relation to the destacking direction.

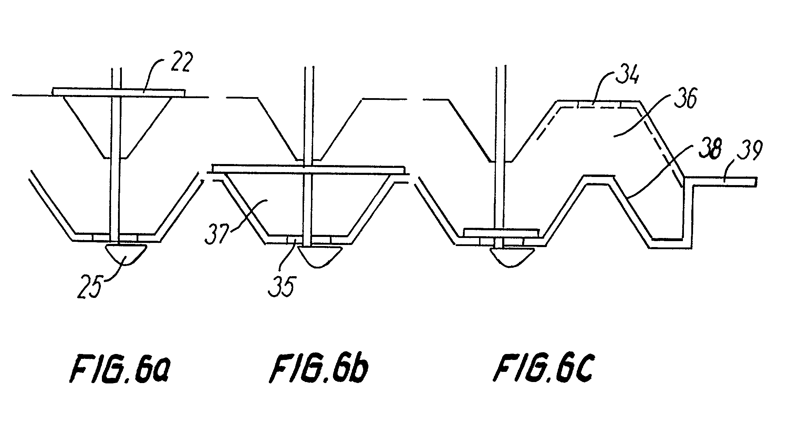

In the example shown in Fig. 3, the gripper units 21 are arranged in a manner so that they grip two by two in two opposite sides of the tray 15 at points located about one sixth of the side length inwards from the sides at right angles thereto. The trays can alternatively be gripped at other locations along their edges. However, as illustrated in Fig. 6, it is also possible to let the gripper units 20 grip into holes 34, 35 in the elevations 36 or depressions 37 of the tray. In this case, when four gripper units are used, the holes used will typically be those located around the quarter points of both the sides of the tray.

When the grip is made in the holes 34, 35 in the elevations 36 or depressions 37 of the tray, there are several different abutment options for the abutment 22. Figs. 6a to 6c show three different options, in which the distance a between abutment 22 and gripper means 25 varies greatly. The gripping manner shown in Fig. 6c will also be applied when the grip is made in a hole at the top of an elevation 36.

The gripper units act as described above regardless of whether the egg-carrying side 38 of the trays 15 faces up or down in the stack 11.

In addition to the restrictions on the design of the gripper means 25 already mentioned, one further restriction applies in case of a grip in holes in the tray 15 in that the gripper means 25 has to be suitably small so that at least in one of its possible positions it can be passed through the hole 34, 35.

Regardless of whether the grip is made around the edge 39 of the tray or in a hole 34, 35 in the tray, the lower part of the gripper unit 20, 21, that is, the gripper means 25 in the examples of embodiments shown, is preferably at least partially tapered or rounded towards the lower side. This will make gripper units 20 adapted to grip around the edge 39 help guide the stack 11 into place in relation to the lifting device 10, while gripper units 20 adapted to grip in holes 34, 35 will more easily be guideable down through such holes.

In trays formed with recesses in the elevations 36 and/or depressions 37, such recesses can also be used as a gripping point. However, minor adaptations of abutments and/or gripper means may be required for the new gripping manner.

The destacking direction is preferably substantially vertical, meaning that the stack 11 is standing on a substantially horizontal surface. The destacking direction means the predominant direction of movement in the introductory phase of the destacking. Thus, the destacking direction will also be considered vertical in the case where a tray 15 is only just lifted free of a vertically standing stack 11 and then moved away therefrom in, for example, a horizontal movement.

In a few places in the above description, the trays 15 have been described as square. This is due to the fact that this particular shape is the one commonly used, but the lifting device 10 according to the invention may just as well be used for, for example, round trays.

It is possible to use other numbers of gripper units than four for gripping the individual tray; suitably rigid trays can be gripped, for example, by only a single gripper unit, and naturally also two, three or more than four gripper units can be used.

## Claims

1. A destacking apparatus with a number of lifting devices (10) for mechanical destacking of egg trays, the lifting device comprising a carrier part (27) with at least one gripper unit (20, 21) having an abutment (22) and a gripper means (25), the abutment and the gripper means being mutually spaced in the destacking direction, **characterized in that** the gripper means (25) is movable transversely to the destacking direction in relation to the abutment, and that the said gripper unit (20, 21) is movable in the destacking direction in relation to the carrier part (27).

2. A destacking apparatus according to claim 1, **characterized in that** prior to engagement the distance (a) between the lower surface of the abutment and the upper surface of the gripper means is larger than the material thickness (t) of the egg tray and smaller than the sum of the distance between the abutment point (A) and the gripping point (G) of the tray and the distance (g) between the gripping points of two consecutive trays (15) in the stack (11) when the trays are pressed completely together.

3. A destacking apparatus according to claim 1, **characterized in that** prior to engagement the distance (a) between the lower surface of the abutment and the upper surface of the gripper means is smaller than six times the material thickness (t) of the egg tray at the place where the gripper unit engages.

4. A destacking apparatus according to any one of the preceding claims, **characterized in that** the gripper unit (20) functions through a hole (34, 35) in the tray so that the gripper means (25) is located on the opposite side of the tray in relation to the abutment (22).

5. A destacking device according to any one of claims 1 to 3, **characterized in that** the gripper unit (21) engages at an edge (39) of the tray (15).

6. A destacking apparatus according to any one of the preceding claims, **characterized in that** at least two, preferably four, gripper units (20, 21) are suspended separately and are movable in the destacking direction independently of each other.

7. A destacking apparatus according to claim 6, **characterized in that** each gripper unit (20, 21) is spring loaded so that it is forced back towards its starting position.

8. A destacking apparatus according to any one of the preceding claims, **characterized in that** the gripper unit (20, 21) is adjustable so that the distance (a) between abutment (22) and gripper means (25) can be varied for adaptation to the current tray type.

9. A destacking apparatus according to claim 8, **characterized in that** the abutment (22) is formed so as to be turnable about the gripper unit (20, 21) with at least two radially projecting arms the lower edges of which are at different levels in relation to the gripper means (25).

10. A destacking apparatus according to any one of the preceding claims, **characterized in that** the gripper means (25) has an upper surface which, towards the egg trays (15), ends in an edge capable of entering between the trays.

11. A destacking apparatus according to any one of the preceding claims, **characterized in that** the gripper means (25) is at least partially tapered or rounded towards the lower surface.

12. A destacking apparatus according to claim 10 or 11, **characterized in that** the gripper means (25) is shaped substantially like a cone or a truncated cone with the base facing the corresponding abutment (22), and that the cone is turnable about an axis located eccentrically in relation to the axis of symmetry of the cone.

13. A destacking apparatus according to claim 10 or 11, **characterized in that** the gripper means (25) is shaped substantially like a spherical segment with the cut facing the corresponding abutment (22), and that the spherical segment is turnable about an axis located eccentrically in relation to the axis of symmetry of the spherical segment.

14. A destacking apparatus according to claim 12 or 13, **characterized in that** the axis of symmetry of the gripper means (25) is substantially parallel to the destacking direction, and that the axis of rotation is also substantially parallel to the destacking direction.

15. A destacking apparatus according to any one of the preceding claims, **characterized in that** the destacking direction is substantially vertical.

16. A destacking apparatus according to any one of claims 1 to 14, **characterized in that** the destacking direction is substantially horizontal.

17. A destacking apparatus according to any one of the preceding claims, **characterized in that** the movement of the gripper means (25) is induced synchronously by means of an actuating mechanism (28) arranged topmost in the lifting device (10).

18. A destacking apparatus according to claim 16, **characterized in that** the actuating mechanism (28) has a rotatable body (30) and a number of links (31) each connected to an arm (32) of the gripper means (25), and that the rotatable body transmits pulls and pushes, preferably from a pneumatic drive cylinder (29), to the links so that the gripper means are rotated by pulls in and pushes on the arms.

19. A destacking apparatus according to claim 16 or 17, **characterized in that** the actuating mechanism (28) comprises several separate mechanisms each driving one or more gripper means (25).

20. A destacking apparatus according to any one of the preceding claims, **characterized in that** the lifting device (10) is suspended, preferably pivotally suspended, from a yoke (12) supported by pivot arms (14) projecting from a rotatable shaft (13).
